# EUROPÄISCHE PATENTSCHRIFT

(11) **EP 0 758 357 B1**
(45) Veröffentlichungstag und Bekanntmachung des Hinweises auf die Patenterteilung: **11.08.1999**
(21) Anmeldenummer: 95919997.7
(22) Anmeldetag: 02.05.1995
(51) Int. Cl.: C08J 9/35, B60R 13/08

(54) **VERFAHREN ZUR HERSTELLUNG EINES VERBUNDSCHAUMS AUS SCHAUMFLOCKEN, VERBUNDSCHAUM SOWIE VERWENDUNGEN DIESES VERBUNDSCHAUMS**
PROCESS FOR PRODUCING A COMPOSITE FOAM FROM FOAM FLAKES, A COMPOSITE FOAM AND USES THEREOF
PROCEDE DE FABRICATION D'UNE MOUSSE COMPOSITE A PARTIR DE FLOCONS DE MOUSSE, MOUSSE COMPOSITE AINSI OBTENUE ET SES UTILISATIONS

(30) Priorität: 03.05.1994 DE 4415586
(43) Veröffentlichungstag der Anmeldung: 19.02.1997
(73) Patentinhaber: STANKIEWICZ GMBH, 29352 Adelheidsdorf (DE)
(72) Erfinder: KLIWER, Carsten, D-29336 Nienhagen (DE); KITTEL, Christoph, D-29336 Nienhagen (DE)
(74) Vertreter: Melzer, Wolfgang, Dipl.-Ing.
(86) Internationale Anmeldenummer: EP9501659
(87) Internationale Veröffentlichungsnummer: WO9529951

(56) Entgegenhaltungen:
- EP-A- 0 065 688
- DE-A- 3 825 251
- DE-B- 2 949 392
- US-A- 4 742 095

## Beschreibung

Die Erfindung betrifft ein Verfahren zur Herstellung eines Verbundschaums mit akustischen Eigenschaften aus Schaumflocken gemäß dem Oberbegriff des Anspruches 1, einen durch das Verfahren hergestellten Verbundschaum sowie Verwendungen eines solchen Verbundschaums.

Aus der Praxis ist die Herstellung von Verbundschaum aus Schaumflocken seit längerer Zeit bekannt, beispielsweise bei der betriebsinternen Aufarbeitung (Recycling) von bei der Produktion anfallenden Reststoffen. Dieses an sich sortenreine Aufarbeiten ist, abgesehen von möglicherweise unterschiedlichen Farben der Schaumflocken problemlos, solange nicht besondere Anforderungen an den Produktionsprozeß und die gewünschten Eigenschaften des Produktes gestellt werden.

Bei einer bekannten Vorgehensweise gemäß EP-B1-0 031 425 werden Schaum(stoff)flocken mit einer wässrigen Dispersion und/oder einer wässrigen Lösung benetzt, die dispergierte oder gelöste Bestandteile zur Erzielung besonderer Eigenschaften enthält, und wird das Gemisch zusammen mit einem solchen polyurethanbildenden Bindemittel ausgehärtet. Durch diese Art der Herstellung sollen die thermische Verformbarkeit, die Möglichkeit des Hochfrequenzschweißens und das Brandverhalten verbessert sowie weitere Eigenschaften und Wirkungen erreicht werden. Das Verfahren ist allerdings verhältnismäßig aufwendig, insbesondere zeitaufwendig, und verwendet Prepolymere sowie Wärme, die entweder im Ofen oder durch ein Heißluftgebläse zugeführt werden muß. Bei der anschließenden Trocknung in einem Trockenschrank beträgt die Aushärtezeit für die Teile ca. 2 Stunden, wobei diese selbst durch Verwendung von Heißluft auf lediglich 15 Minuten verkürzt werden kann. Durch Zusatz gelöster Feststoffe, wie z. B. Farbpigmente, soll dem Endprodukt ein gleichmäßiges Aussehen verliehen werden.

Dem Fachmann auf dem einschlägigen Gebiet ist jedoch keine Lehre gegeben, die ihn in die Lage versetzt, Schaumflocken unterschiedlicher Größe, unterschiedlicher Herkunft und/oder unterschiedlicher Materialzusammensetzung zu einem Verbundschaum zusammenzufügen. Es sind auch keine Hinweise gegeben, wie die Menge an einzusetzendem Bindemittel und anderer Zusatzmittel wie Trennmittel reduziert werden kann, ohne die mechanischen und physikalischen Kennwerte des Verbundschaums aus Schaumflocken zu verschlechtern, insbesondere bezüglich akustischer Eigenschaften.

Dies ist jedoch wesentlich und gewinnt zunehmend an Bedeutung. Wegen der üblichen Herstellung von derartigen Formteilen in Werkzeugen soll aus Gründen des Umweltschutzes der Verbrauch an Trennmitteln zur Erzielung der Entformbarkeit so gering wie möglich gehalten werden. Aufgrund der bevorstehenden Rücknahmeverpflichtung von beispielsweise Altfahrzeugen durch den Hersteller, werden künftig neben den üblichen Mengen an Produktions-Reststoffen zusätzlich große Mengen an Schaumstoffen aus z. B. Sitzpolstern und Schallisolationen anfallen, die einer Wiederverarbeitung zugeführt werden müssen.

Es ist daher Aufgabe der Erfindung, das bekannte Verfahren so weiterzubilden, daß trotz geringer Mengen an Bindemitteln und trotz Verwendung von Schaumflocken unterschiedlicher Größe, unterschiedlicher Herkunft und/oder unterschiedlicher Materialzusammensetzung Verbundschäume erreichbar sind, deren mechanische Eigenschaften mit denen von nach dem Stand der Technik hergestellten Verbundschäumen vergleichbar sind und die zusätzlich schallisolierende Eigenschaften aufweisen.

Die Aufgabe wird durch die Merkmale des Anspruchs 1 gelöst.

Die Erfindung wird durch die Unteransprüche weitergebildet. Ein geeigneter Verbundschaum ergibt sich gemäß Anspruch 5. Verwendungen sind in den Ansprüchen 6 bis 8 dargestellt.

Demgemäß werden Schaumflocken unterschiedlicher Herkunft und/oder unterschiedlicher Zusammensetzung nach an sich bekannten Techniken zu unterschiedlich geformten Teilen in einem energie- und kostensparenden Prozeß züsammengefügt, wobei durch Einbetten solcher Teile in Neuteile aus Schaum, vorzugsweise aus Polyurethanschaum, ein sortenreines erneutes Recycling begünstigt wird, auch wenn der Verbundschaum und der frisch erzeugte Polyurethanschaum zusammen als akustische Feder innerhalb eines Masse-Feder-Systems verwendet werden. Die akustisch wirksame Masse dieses Systems wird dabei üblicherweise durch eine schalldämmende möglichst biegeweiche Schwerschicht an sich üblicher Art gebildet.

Das in nur geringen prozentualen Gewichtsteilen zugesetzte Bindemittel ist bei Raumtemperatur inaktiv und führt zu einer sehr guten Benetzung der Schaumflocken, die sich auch nach dem Benetzen gut fördern (transportieren) und dosieren lassen. Durch diese Art der Vorbehandlung der Schaumflocken ist eine kontinuierliche Fertigung von Formteilen aus Verbundschaum möglich. Zum Aushärten wird Wasserdampf benutzt, mit anschließend angelegtem Unterdruck und/oder zugeführter Heißluft, um den Trocknungs- und Aushärteprozeß zu beschleunigen. Anstelle des Wasserdampfes kann auch Mikrowellenenergie verwendet werden.

Das erfindungsgemäße Verfahren zur Herstellung von Verbundschaum aus Schaumflocken bei reduziertem Bindemitteleinsatz wird nachstehend anhand zweier Beispiele erläutert.

Es standen zwei Chargen von Schaumflocken unterschiedlicher Herkunft und Zusammensetzung zur Verfügung. Die erste Charge entstammte Produktionsrückständen aus der Herstellung von Polyurethan-Leichtschaum mit einer Dichte, nach der Herstellung im geschlossenen Werkzeug, von ca. 60 bis 80 kg/m³. Durch Sieben wurden Schaumflockenfraktionen mit Kantenlängen von 6, 8, 12 und 15 mm bereitgestellt. Die Schaumflocken der zweiten Charge stammten aus zurückgenommenen Schaumstoff-Sitzpolstern von Fahrzeugen. Diese Schaumflocken hatten eine im wesentlichen einheitliche Kantenlänge in der Größenordnung von 8 mm. In Vorversuchen hinsichtlich des Benetzens der Schaumflocken mit einem Polyurethan-Dispersions-Bindemittel und den anschließenden Verfahrensschritten der Förderung (des Transportes) und der Dosierung wurde festgestellt, daß Schaumflocken mit Kantenlängen in der Größenordnung von 8 mm optimale Ergebnisse zeigten.

Im ersten Beispiel wurden von der ersten Charge lediglich die Schaumflocken mit Kantenlängen 8 mm gewählt und mit denen der zweiten Charge gemischt. Die Schaumflocken aus den beiden Chargen wurden zu je 50 Gewichtsteilen zu einem Ansatz zusammengeführt und mit einem Bindemittel benetzt. Als Bindemittel wurde ein wässriges Bindemittelgemisch aus einem NCO-Prepolymer mit blockierten Isocyanatgruppen verwendet, das eine Polyamidkomponente mit primären und/oder sekundären (cyclo)aliphatisch gebundenen Aminogruppen enthält.

Das Polyurethan-Dispersions-Bindemittel wurde im Verhältnis 1:1 Gewichtsteilen mit Wasser verdünnt. Von dieser Lösung kamen bei den Beispielen 20 Gew.-% bezogen auf das Gewicht der verwendeten Schaumflocken zum Einsatz.

Zur Herstellung des Verbundschaums aus Schaumflocken wurden die Schaumflocken nach dem Benetzen mittels Unterdruck in einen Dosierbunker gesaugt und von hier mit Überdruck über zwei Injektoren in ein Formbett geblasen, daß die Abmessungen 550 x 308 x 25 mm hat. Das Formbett wurde 30 Sekunden lang mit Dampf durchströmt mit einem Druck von 4 bar und einer Temperatur von 153 °C. Die Dampftemperatur kann im Bereich von 120 bis 180 °C, vorzugsweise im Bereich von 140 bis 160 °C variiert werden. Anschließend erfolgte das Anlegen eines Unterdrucks, um die Restfeuchte vom Bedampfen aus dem Verbundschaum zu saugen. Die untere Temperaturgrenze von 120 °C ergibt sich dadurch, daß erst ab dieser Temperatur das wässrige Bindemittel mit den blockierten Isocyanatgruppen reaktionsfähig wird, und die obere Temperaturgrenze ergibt sich dadurch, daß bei höheren Temperaturen thermische Zersetzung einsetzen würde.

Im zweiten Beispiel sind ausschließlich sortenreine Schaumflocken der Herkunft gemäß erster Charge verwendet worden mit ebenfalls einer einheitlichen Kantenlänge in der Größenordnung von 8 mm. Auch hier wurde das gleiche Polyurethan-Dispersions-Bindemittel mit 1:1 Gewichtsteilen mit Wasser verdünnt und wurden von dieser Lösung 20 Gew.-% bezogen auf das Gewicht der Schaumflocken auf die Schaumflocken zum Benetzen aufgebracht. Die übrigen Verfahrensschritte entsprachen denen des ersten Beispiels.

Für die Ermittlung der optimalen Einstellzeiten für die Dampfdurchströmung und das Anlegen des Unterdrucks sind ebenfalls Vorversuche durchgeführt worden. Beide Parameter wurden so variiert, daß sich möglichst günstige mechanische Kennwerte ergaben. Bei dem bevorzugten Dampf-Temperaturbereich (140 bis 160 °C) lagen die Dampfdurchströmungszeiten im Bereich von 15 bis 60 Sekunden mit einem optimalen Wert von 30 Sekunden, und die Unterdruckzeiten betrugen 30 bis 45 Sekunden mit einem optimalen Wert von 45 Sekunden.

Die nach dem beschriebenen Verfahren hergestellten Verbundschäume aus Schaumflocken mit reduziertem Bindemitteleinsatz führten zu Formteilen mit denen in der Tabelle angegebenen Werten:

**Tabelle 1**

| | aus Versuch 1 | aus Versuch 2 |
|---|---|---|
| | | |
| Dichte kg/m³ | x = 296,8 | x = 262,2 |
| DIN 53420 | n = 3 | n = 3 |
| | | |
| Stauchhärte kPa | x = 32,2 | x = 22,4 |
| DIN 53577 bei 40 % | n = 3 | n = 3 |
| | | |
| Zugfestigkeit N/mm² | x = 0,04 = 40 kPa | x = 0,05 = 50 kPa |
| DIN 53571 A | n = 5 | n = 5 |
| | | |
| Reißdehnung % | x = 22,4 | x = 18,7 |
| DIN 53571 A | n = 5 | n = 5 |
| | | |
| E-Modul N/m² | x = 57 234 | x = 117 406 |
| DIN 53426 | n = 6 | n = 4 |
| | | |
| Verlustfaktor | x = 0,23 | x = 0,25 |
| DIN 53426 | n = 6 | n = 4 |
| Darin bedeuten: n = die Anzahl der verwendeten Proben x = Mittelwert der gemessenen Werte für die Proben. | | |

Der Elastizitäts-Modul (E-Modul) und der Verlustfaktor wurden bei 23 °C und 50 % relative Feuchte, 24 Stunden konditioniert, gemessen, und zwar in einem Frequenzbereich von 50 bis 70 Hz. Die Abmessungen der Proben betrugen (Breite, Länge, Höhe) 50 mm x 50 mm x 22 mm.

An weiteren Proben aus den durch solche Verbundschäume gebildeten Formteilen wurden die akustischen Daten, wie dynamischer Elastizitäts-Modul und Verlustfaktor nach dem Hubschwingungsversuch gemäß DIN 53426 ermittelt.

Der Elastizitäts-Modul E liegt demnach zweckmäßig im Bereich zwischen 50.000 und 140.000 N/m², der Verlustfaktor ist zweckmäßig größer als 0,2 und die Dichte ist zweckmäßig größer als 150 kg/m³. Die Dichte (das Raumgewicht) kann über die Füllmenge der Schaumflocken gesteuert werden. Der Wert der Dichte von über 150 kg/m³ ergibt sich, da bei niedrigeren Dichten die innere Festigkeit der hergestellten Teile stark nachläßt. Bei den Vorversuchen zeigte sich, daß Schaumflocken mit Kantenlängen von unter 8 mm zwar zu einer erhöhten Dichte führen, jedoch einen erhöhten Einsatz an Bindemittel zur Folge haben. Größere Schaumflocken mit Kantenlängen über 8 mm ermöglichen zwar geringere Dichten, jedoch läßt die Oberflächenqualität und die Gleichmäßigkeit der Oberfläche nach.

Weitere Versuche ergaben, daß zum Benetzen der Schaumflocken mit dem Polyurethan-Dispersions-Bindemittel bereits 5 Gew.-% an Bindemittel, bezogen auf das Gewicht der eingesetzten Schaumflocken genügen, insbesondere wenn die Oberseite eines erfindungsgemäß hergestellten Verbundschaumes keinen direkten mechanischen Belastungen in Erstreckungsrichtung der Oberfläche ausgesetzt ist, etwa nach Art einer Scheuerbewegung.

Das erfindungsgemäße Verfahren unter Verwendung einer wässrigen Polyurethan-Dispersion als Bindemittel ist vorteilhaft, da das Benetzen mit vergleichsweise geringen Mengen an Bindemittel erfolgen kann und die Förderbarkeit und die leichte Entformbarkeit bei geringem Trennmitteleinsatz deutliche Vorteile gegenüber der Verwendung von Standard-Prepolymeren oder 2K-Polyurethan-Bindemitteln bewirken. Außer dem Polyurethan-Dispersions-Bindemittel sind keine weiteren Additive, Pigmente oder sonstige Zuschlagstoffe erforderlich. Aufgrund der optimalen Konditionierung der Schaumflocken durch das Polyurethan-Dispersions-Bindemittel ist außer der Herstellung des Verbundschaumes in einem Werkzeug auch eine kontinuierliche Bahnenfertigung möglich. Diese wird vorteilhaft unter Verwendung von Doppelbandpressen durchgeführt, wie sie an sich üblich sind.

Nach dem erfindungsgemäßen Verfahren hergestellte Formteile aus Verbundschaum sind zur Schallisolation in Fahrzeugen und im allgemeinen Maschinenbau verwendbar. Insbesondere für solche Anwendungen können an sich bekannte adhäsive Beschichtungen vorgesehen werden, die eine kraftschlüssige Verbindung mit einem Blech oder dgl. erreichen, jedoch ein zerstörungsfreies Wiederentfernen erlauben. Der Verbundschaum ist auch als trittschalldämmender Bestandteil in Trockenestrich-Elementen für den Hochbau geeignet sowie als akustisch wirksame Zwischenlage in dreischichtigen Verbundsystemen, wie sie für Leichtbauwände eingesetzt werden. Die beiden äußeren Schichten solcher Systeme bestehen z. b. aus Gipsfaserplatten oder anderen bauüblichen anorganischen Werkstoffen, aus Kunststoff- oder Holzplatten.

Der Aufbau und die Verwendung des Verbundschaums wird anhand der in der Zeichnung dargestellten Verwendungsbeispiele näher erläutert. Es zeigen:
- Fig. 1: Perspektivisch ein schalenförmiges Bauteil, das in Fahrzeuge einlegbar ist,
- Fig. 2: den Schnitt II-II in Fig. 1,
- Fig. 3: im Schnitt ein die Erfindung verwendendes trittschalldämmendes Teil im Hochbau,
- Fig. 4: im Schnitt eine die Erfindung verwendende Trennwand.

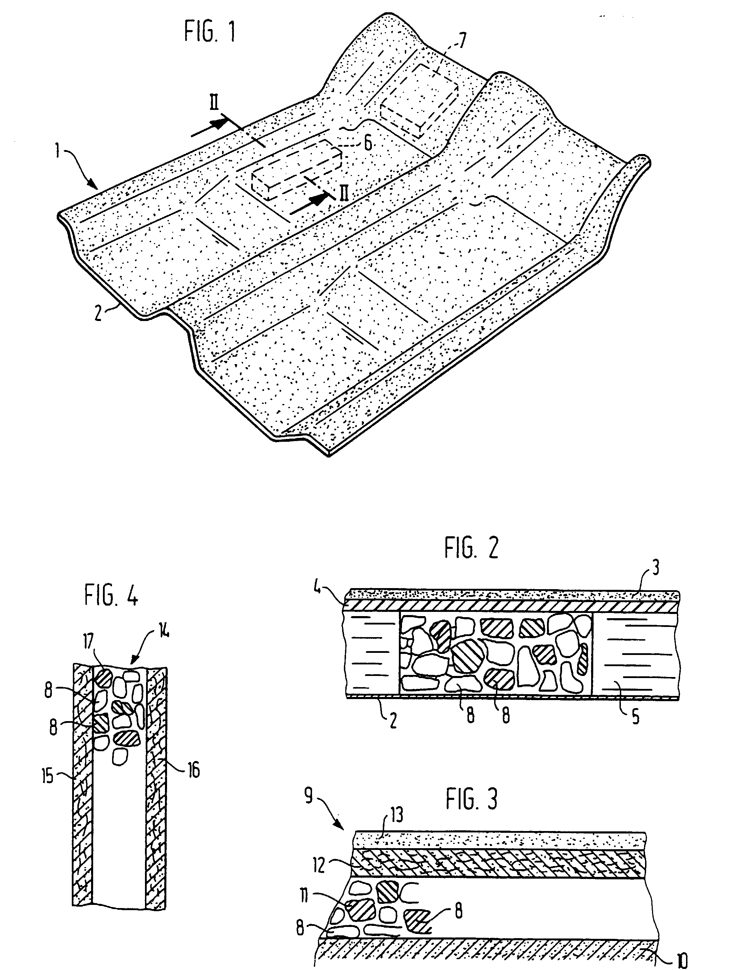

Die Erfindung wird zunächst anhand der Fig. 1 und 2 näher erläutert.

Fig. 1 zeigt ein Formteil 1 wie es insbesondere in Kraftfahrzeuge einlegbar ist. Formteile dieser Art sind grundsätzlich seit langem bekannt, beispielsweise sind solche Formteile in der DE-AS 20 06 741 erläutert. Das Formteil 1 ist auf das Bodenblech 2 einer Fahrzeugkarosserie aufgelegt oder aufgeklebt. Die Sichtseite, das ist die zum Fahrgastraum weisende Seite eines solchen Formteils 1, ist durch einen Teppich 3 gebildet. Dazwischen befindet sich ein Masse-Feder-System für Schalldämmzwecke. Dieses besteht aus einer schalldämmenden biegeweichen Schwerschicht 4, die an den Teppich 3 angrenzt und einer Feder 5 aus Schaumstoff, die zwischen Schwerschicht 4 und Bodenblech 2 angeordnet ist. Die einzelnen Schichten können fest miteinander verklebt oder aneinander angeformt sein. Wesentlich ist lediglich eine kraftschlüssige Verbindung zwischen diesen, wie das an sich bekannt ist. Eine kraft- und formschlüssige Verbindung zwischen Feder 5 und Bodenblech 2 kann beispielsweise auch durch eine an sich bekannte adhäsive Beschichtung oder Ausrüstung erreicht werden, die ein zerstörungsfreies Wiederentfernen erlaubt. Ferner kann die Schwerschicht 4 direkt an den Teppich 3 angeschäumt sein.

In Bereichen hoher mechanischer Belastung ist anstelle der Feder 5 ein Verbundschaum-Element gemäß der Erfindung vorgesehen, das im Vergleich zur Schwerschicht 4 ebenfalls erheblich niedrigere Dichte besitzt.

Solche Elemente sind zum einen ein Schwellerverstärker 6 und zum anderen eine Fußstütze 7.

Der erfindungsgemäße Aufbau des Verbundschaums des Schwellerverstärkers 6 wird anhand Fig. 2 erläutert. Der Aufbau des Verbundschaumes der Fußstütze 7 ist dem Grundsatz nach gleich.

Der Verbundschaum enthält Schaumflocken 8, die unterschiedliche Herkunft, unterschiedliche Zusammensetzung und/oder unterschiedliche Kantenlängen besitzen können und die gemäß dem erfindungsgemäßen Verfahren zur Bildung des Verbundschaumes behandelt worden sind. Die unregelmäßige Konturierung sowie die unterschiedlichen Schraffuren sollen andeuten, daß die behandelten Schaumflocken 8 verformt, ausgehärtet und getrocknet worden sind, beispielsweise in einer Form, damit sie in das Formteil 1 integrierbar sind. Dabei sind insbesondere die für schalltechnische Zwecke erforderlichen physikalischen Randbedingungen, insbesondere eine Dichte von über 150 kg/m³, ein dynamischer E-Modul im Bereich zwischen 50.000 und 140.000 N/m² und ein Verlustfaktor von über 0,2 eingehalten.

Zur Bildung des Formteils 1 ist das Verbundschaum-Teil, beispielsweise der Schwellerverstärker 6 oder die Fußstütze 7 an der entsprechenden Stelle der Feder bei deren Bildung bereits eingesetzt, jedoch auch später einsetzbar.

Fig. 3 zeigt die Verwendung des erfindungsgemäßen Verbundschaums im Hochbau, und zwar als Trittschalldämmung 9. Auf einen Estrich 10 ist die Verbundschaum-Schicht 11 aufgebracht, auf dieser befindet sich eine Platte 12, beispielsweise eine Gipsfaserplatte oder eine Holzfaserplatte, wobei auf dieser ein Fußbodenbelag 13 wie ein Teppich aufgebracht ist oder aufbringbar ist.

Der Estrich 10 kann dabei durch ein Trockenestrich-Bauelement gebildet sein, so daß insgesamt eine Fertigbauplatte mit trittschalldämmenden Eigenschaften gebildet ist. Im letzteren Fall ist die Verbundschaum-Schicht 11 mit dem Estrich 10 fest verbunden und ist zweckmäßig auch die Platte 12 mit der Verbundschaum-Schicht 11 fest verbunden. Je nach speziellem Anwendungsfall kann der Fußbodenbelag 13 wiederum fest mit der Platte 12 verbunden sein oder auch später über mehrere derartig gebildete Bauelemente legbar sein.

Zur Verlegung auf gebäudeinterne Estrich-Flächen kann die Verbundschaum-Schicht 11 als eigenständiges Erzeugnis verwendet werden, sie kann auch fest mit der Platte 12 verbunden sein.

Fig. 4 zeigt ein Trennwandelement 14 mit zwei Plattenelementen 15 und 16, die gleich, aber auch unterschiedlich sein können. Als solche Plattenelemente sind Gipsfaserplatten, Gipskartonplatten, Holzpaneel-Elemente oder dgl. verwendbar. Zwischen den beiden Plattenelementen 15 und 16 befindet sich eine nach dem erfindungsgemäßen Verfahren hergestellte Verbundschaum-Schicht 17. Diese durch die Verbundschaum-Schicht 17 gebildete Füllung des Trennwandelementes erreicht eine erhebliche Schalldämmung zwischen den durch das Trennwandelement 14 getrennten Räumen.

Grundsätzlich sind auch andere Verwendungen im Maschinenbau und im Bauwesen denkbar.

## Patentansprüche

1. Verfahren zur Herstellung eines Verbundschaums mit akustischen Eigenschaften aus Schaumflocken,
wobei die Schaumflocken mit einem wässrigen Polyurethan-Dispersions-Bindemittel benetzt werden und anschließend ausgehärtet werden,
**dadurch gekennzeichnet,**
daß Schaumflocken (8) unterschiedlicher Größe, unterschiedlicher Herkunft und/oder unterschiedlicher Materialzusammensetzung verwendet werden,
daß die Benetzung mit geringen mengen des Polyurethan-Dispersions-Bindemittels erfolgt, das als wässriges Bindemittelgemisch aus einem NCO-Prepolymer mit blockierten Isocyanatgruppen besteht und eine Polyaminkomponente mit primären und/oder sekundären (cyclo)aliphatisch gebundenen Aminogruppen enthält,
wobei das Polyurethan-Dispersions-Bindemittel nach dem Verdünnen mit Wasser im Verhältnis 1:1 in einer Mindestmenge von 5 Gew.-% ,jedoch nicht mehr als 20 Gew.-%, jeweils bezogen auf die eingesetzte Menge an Schaumflocken (8) zugesetzt wird,
daß das Gemisch anschtließend zu einem Formteil (1) oder zu kontinuierlichen Bahnen zusammengefügt und unter Einwirkung von heißem Wasserdampf oder von Mikrowellenenergie gehärtet und anschließend unter Verwendung von Heißluft und/oder Unterdruck getrocknet wird.

2. Verfahren nach Anspruch 1,
**dadurch gekennzeichnet,**
daß Schaumflocken (8) mit Kantenlängen zwischen 6 und 15 mm, vorzugsweise im Bereich von 8 mm, verwendet werden.

3. Verfahren nach einem der Ansprüche 1 oder 2;
**dadurch gekennzeichnet,**
daß zum Härten Wasserdampf mit Temperaturen zwischen 120 und 180 °C, vorzugsweise 140 und 160 °C, bei einem Druck von ca. 4 bar verwendet wird.

4. Verbundschaum mit akustischen Eigenschaften aus Schaumflocken (8), hergestellt nach dem Verfahren gemäß einem der Ansprüche 1 bis 3,
**dadurch gekennzeichnet,**
daß die Dichte größer als 150 kg/m³ ist, der dynamische Elastizitäts-Modul im Bereich zwischen 50.000 und 140.000 N/m² liegt und der Verlustfaktor größer als 0,2 ist.

5. Verwendung des Verbundschaums mit akustischen Eigenschaften aus Schaumflocken (8), hergestellt nach dem Verfahren gemäß einem der Ansprüche 1 bis 3, zur Schallisolation (Formteil 1) in Fahrzeugen und im allgemeinen Maschinenbau.

6. Verwendung des Verbundschaums mit akustischen Eigenschaften aus Schaumflocken (8), hergestellt nach dem Verfahren nach einem der Ansprüche 1 bis 3, als trittschalldämmender Bestandteil (9) in Trockenestrich-Elementen oder zur Auflage auf einen Estrich (10) für den Hochbau.

7. Verwendung des Verbundschaums mit akustischen Eigenschaften aus Schaumflocken (8), hergestellt nach dem Verfahren gemäß einem der Ansprüche 1 bis 3, als akustisch wirksame Zwischenlage (Schicht 17) in dreischichtigen Verbundsystemen als Leichbauwände, Trennwandelemente (14) oder dgl..

## Claims

1. Method of manufacturing a composite foam, having acoustic properties, from foam flakes, wherein the foam flakes are wetted with an aqueous polyurethane dispersion binding agent and subsequently cured,
characterized in that,
foam flakes (8) of differing sizes, differing origins and/or differing material compositions are employed, in that the wetting is effected with small quantities of the polyurethane dispersion binding agent which is provided as an aqueous binding agent mixture of an NCO-prepolymer with blocked isocyanate groups and contains a polyamine component having primary and/or secondary (cyclo)aliphatically bonded amino groups, wherein the polyurethane dispersion binding agent, after dilution with water in the ratio 1:1, is added in a minimum quantity of 5 weight %, but not more than 20 weight %, in each case referred to the quantity of foam flakes (8) employed, in that, the mixture is subsequently combined to a molded part (1) or to continuous webs and is hardened under the effect of hot (water) steam or microwave energy and is subsequently dried with the employment with hot air and/or vacuum.

2. Method according to claim 1,
characterized in that,
foam flakes (8) with edge lengths between 6 and 15 mm, preferably in the region of 8 mm, are employed.

3. Method in accordance with any of claims 1 or 2,
characterized in that,
for hardening there is employed (water) steam with a temperature between 120 and 180°C, preferably 140 and 160°C, at a pressure of about 4 bar.

4. Composite foam, having acoustic properties of foam flakes (8), manufactured according to the method in accordance with any of claims 1 to 3,
characterized in that,
the density is greater than 150kg/m³, the dynamic modulus of elasticity is in the range between 50000 and 1400 0 N/m² and the loss factor is greater than 0.2.

5. The use of the composite foam, having acoustic properties, of foam flakes (8), manufactured according to the method in accordance with any of claims 1 to 3, for sound insulation (molded part 1) in vehicles and in general machine construction.

6. Use of the composite foam, having acoustic properties, of foam flakes (8), manufactured according to the process in accordance with any of claims 1 to 3, as footfall sound insulation component (9) in dry flooring plaster elements or for application onto flooring plaster (10) for building construction.

7. Use of composite foam, having accoustic properties, of foam flakes (8), manufactured according to the method in accordance with any of claims 1 to 3, as accoustically effective intermediate layer (layer 17) in three-layer composite systems, as light-construction walls, dividing wall elements (14) or the like.

## Revendications

1. Procédé de fabrication d'une mousse composite présentant des propriétés acoustiques, en flocons de mousse, les flocons de mousse étant imprégnés d'un liant aqueux à dispersion de polyuréthanne et étant ensuite durcis, caractérisé en ce qu'on utilise des flocons de mousse (8) de tailles différentes, de provenances différentes et/ou de compositions différentes, en ce que l'imprégnation s'effectue avec de faibles quantités de liant à dispersion de polyuréthanne, qui en tant que mélange liant aqueux est constitué d'un prépolymère NCO avec des groupes isocyanate bloqués et contient un composant polyamide avec des groupes amino primaires et/ou secondaires (cyclo)-aliphatiques liés, le liant à dispersion de polyuréthanne étant ajouté après dilution avec de l'eau dans un rapport de 1 à 1, en une quantité minimale de 5 % en poids, mais non supérieure à 20 % en poids, toujours par rapport à la quantité utilisée de flocons de mousse (8), en ce que le mélange est ensuite assemblé en un élément façonné (1) ou en bandes continues et est durci sous l'action de vapeur d'eau chaude ou d'énergie à micro-ondes et est ensuite séché par utilisation d'air chaud et/ou sous dépression.

2. Procédé selon la revendication 1, caractérisé en ce qu'on utilise des flocons de mousse (8) dont les longueurs sur les bords sont compsises entre 6 et 15 mm, de préférence de l'ordre de 8 mm.

3. Procédé selon l'une des revendications 1 à 3, caractérisé en ce que pour le durcissement on utilise de la vapeur d'eau à une température comprise entre 120 et 180 °C, de préférence entre 140 et 160 °C, sous une pression d'environ 4 bars.

4. Mousse composite présentant des propriétés acoustiques en flocons de mousse (8), fabriquée d'après le procédé selon l'une des revendications 1 à 4, caractérisée en ce que la masse volumique est supérieure à 150 kg/m², le module d'elasticité dynamique est compris entre 50 000 et 140 000 N/m², et le facteur de perte est supérieur à 0,2.

5. Utilisation de la mousse composite présentant des propriétés acoustiques, en flocons de mousse (8), fabriquée d'après le procédé selon l'une des revendications 1 à 4, pour l'isolation phonique (élément façonné 1) dans des véhicules et en général en construction mécanique.

6. Utilisation de la mousse composite présentant des propriétés acoustiques, en flocons de mousse (8), fabriquée d'après le procédé selon l'une des revendications 1 à 4, en tant que composant (9) amortissant le bruit de pas dans des éléments de chape sèche ou à placer sur une chape (10) pour le bâtiment.

7. Utilisation de la mousse composite présentant des propriétés acoustiques, en flocons de mousse (8), fabriquée d'après le procédé selon l'une des revendications 1 à 4, en tant que couche intermédiaire (couche 17) à action acoustique dans des systèmes composites à trois couches comme cloisons légères, éléments de séparation (14) ou similaires.
